# EUROPÄISCHE PATENTSCHRIFT

(11) **EP 2 077 937 B1**
(45) Veröffentlichungstag und Bekanntmachung des Hinweises auf die Patenterteilung: **28.07.2010**
(21) Anmeldenummer: 07803505.2
(22) Anmeldetag: 14.09.2007
(51) Int. Cl.: B29C 45/16, B29C 45/56

(54) **DREHEINRICHTUNG MIT ABHEBBAREM DREHTELLER FÜR EINE HORIZONTALSPRITZGIESSMASCHINE**
TURNING DEVICE WITH RAISABLE ROTARY TABLE FOR A HORIZONTAL INJECTION-MOULDING MACHINE
DISPOSITIF ROTATIF À PLATEAU TOURNANT RELEVABLE POUR MACHINE DE MOULAGE PAR INJECTION HORIZONTALE

(30) Priorität: 06.10.2006 DE 102006047763
(43) Veröffentlichungstag der Anmeldung: 15.07.2009
(73) Patentinhaber: KraussMaffei Technologies GmbH, 80997 München (DE)
(72) Erfinder: JESTRICH, Dirk, 80999 München (DE)
(74) Vertreter: Wilhelm, Ludwig
(86) Internationale Anmeldenummer: PCT/EP2007/059738
(87) Internationale Veröffentlichungsnummer: WO 2008/043641

(56) Entgegenhaltungen:
- EP-A- 1 561 562
- EP-A- 1 561 563
- DE-A1- 2 410 540
- DE-A1-102005 016 239
- JP-A- 60 129 424
- US-A- 3 862 588

## Beschreibung

Die Erfindung betrifft eine Dreheinrichtung für eine Horizontalspritzgießmaschine, insbesondere für Formhälften von Spritzgießwerkzeugen, gemäß dem Oberbegriff von Anspruch 1, sowie eine Horizontalspritzgießmaschine mit einer zwischen den Formaufspannplatten angeordneten Dreheinrichtung für Formhälften von Spritzgießwerkzeugen gemäß dem Oberbegriff der nebengeordneten Ansprüche 10 und 12.

Die WO 01/010624 A1 offenbart eine Zwei-Platten-Horizontalspritzgießmaschine mit einer feststehenden und einer beweglichen Formaufspannplatte sowie mit einer zwischen den Formaufspannplatten angeordneten und parallel zur Maschinenlängsachse verschiebbaren und um eine vertikale Achse drehbaren Dreheinrichtung für Spritzgießwerkzeuge. Die Dreheinrichtung umfasst eine mittels erster Antriebsmittel in Maschinenlängsrichtung verschiebbare Grundplatte, auf der ein Drehteller angordnet ist, der mit zweiten Antriebsmitteln um die vertikale Achse drehbar ist. Diese Art von Horizontalspritzgießmaschine hat den Vorteil, dass die Dreheinrichtung völlig von zwischen den Formaufspannplatten verlaufenden Holmen bzw. Säulen losgelöst sein kann, so dass diese weder mit Gewichts- noch mit Drehmomenten belastet werden. Dies ist insbesondere bei Zwei-Platten-Horizontalspritzgießmaschinen von Bedeutung, da bei diesen die Säulen je nach Bauart mitbewegt werden und sich geringfügige Änderungen im Abstand der Säulen zueinander negativ auf eine an diesen Säulen geführte und abgestützte Dreheinrichtung für Sprizgießwerkzeuge auswirken würde. Ausserdem ist das Spritzgießwerkzeug im eingebauten Zustand von beiden Seiten sowie von oben frei zugänglich. Bei der Drehbewegung ergeben sich keine Einschränkungen hinsichtlich der Größe der einbaubaren Spritzgießwerkzeuge ausser durch die Öffnungsweite der Schließeinheit der Spritzgießmaschine.

Aus der WO 2005/035218 A1 ist eine weitere Zwei-Platten-Horizontalspritzgießmaschine mit einer zwischen den Formaufspannplatten angeordneten und um eine vertikale Achse drehbaren Dreheinrichtung für Spritzgießwerkzeuge bekannt, bei der die Dreheinrichtung eine Grundplatte und einen um eine vertikale Achse drehbaren Drehteller aufweist. Im Unterschied zu der zuvor genannten Zwei-Platten-Horizontalspritzgießmaschine ist die Dreheinrichtung nicht axial verfahrbar, sondern die Grundplatte ist fest mit dem Maschinenbett verbunden. Die beiden äußeren Formaufspannplatten sind auf dem Maschinenbett verfahrbar und können auf die Dreheinrichtung zu und von dieser wegbewegt werden.

Eine weitere Horizontalspritzgießmaschinen mit einer axial nicht verfahrbaren auf dem Maschinenbett befestigten Dreheinrichtung ist aus der EP 1 512 512 A2 bekannt. Die dort offenbarte Dreheinrichtung, dort auch Mittelteil genannt, weist ein auf dem Maschinenbett befestigtes feststehendes Teil und ein demgegenüber drehbares Teil auf. Zwei äußere verschiebbare Formaufspannplatten sind verschieblich auf dem Maschinenbett abgestützt und weisen Holme auf, die mit dem Mittelteil verriegelbar sind.

Bei den oben beschriebenen Horizontalspritzgießmaschinen mit drehbarer Mittelplatte oder einer sogenannten Wendeplatte stellt sich das Problem, dass es beim Spritzprägen von unsymmetrischen Formteilen zur Ausbildung von Querkräften kommen kann, die von den Werkzeughälften über die Formaufspannplatten in das Maschinenbett abgeleitet und von diesem aufgenommen werden müssen. Diese Querkräfte werden dabei durch die Lagerung zwischen dem drehbaren Teil (drehbares Mittelteil, drehbarer Formträger, oder Drehteller) und dem drehfesten Teil geleitet und führen zu einer nicht unbeachtlichen Belastung dieses Lagers. Um gleichwohl mit solchen Spritzgießmaschinen auch Spritzprägeanwendungen vornehmen zu können, bedarf es entsprechend massiver und damit vergleichsweise teurer Lager.

Zur Vermeidung dieses Problems ist aus der EP 1 561 562 A1, der EP 1561563 und der DE 10 2005 003 566 A1 eine Spritzgießmaschine der oben beschriebenen Art bekannt, bei der das drehbare Teil des Mittelteils gegenüber dem festen Teil des Mittelteils mittels hydraulischer, pneumatischer oder elektromagnetischer Mittel angehoben werden kann, um einen Spalt zwischen den beiden Teilen auszubilden und in dem Spalt zugleich ein hydrostatisches Lager, ein pneumatisches Lager oder ein Magnetkissen-Lager zu erzeugen. Alternativ dazu kann der Spalt auch durch Ein- und Ausfahren von Keilen als Zwischenlager zwischen dem feststehenden und dem drehbaren Teil gebildet werden. In diesem Fall kann in dem Spalt ein Gleitlager oder ein Wälzlager vorgesehen werden, auf dem das drehbare Teil nach Entfernen der Keile aufsitzt und das die Last des drehbaren Teils des Mittelteils während der Drehbewegung aufnimmt. Bei dieser Ausführungsform ist das drehbare Teil des Mittelteils während des Einspritzens nur auf den Keilen gelagert, d.h. also nur punktuell abgestützt, was nachteilig im Hinblick auf eine stabile vertikale Ausrichtung des Mittelteils ist. Bei Verwendung eines Gleitlagers kann auch auf die Erzeugung des Spaltes verzichtet werden, d.h. das drehbare Teil des Mittelteils liegt dauerhaft auf dem feststehenden Teil auf. Diese Ausführungsform ist insofern ungünstig, als bei einem dauerhaft belasteten Gleitlager die Erzeugung der Drehbewegung mit einem vergleichsweise hohen Energieaufwand verbunden ist.

Ausgehend hiervon liegt der Erfindung die Aufgabe zugrunde, eine Dreheinrichtung für eine Horizontalspritzgießmaschine anzugeben, bei der eine stabile Lage des drehbaren Teils der Dreheinrichtung gegenüber dem feststehenden Teil der Dreheinrichtung auch dann gewährleistet ist, wenn das Lager entlastet ist und auch wenn ein Wälzlager vorgesehen ist. Eine weitere der Erfindung zugrundeliegende Aufgabe besteht darin, eine mit einer derartigen Dreheinrichtung ausgestattete Horizontalspritzießmaschine anzugeben.

Die Lösung der zuerst genannten Aufgabe erfolgt durch eine Dreheinrichtung mit den Merkmalen von Anspruch 1, dessen Oberbegriff von der EP 1 561 563 ausgeht. Die zweitgenannte Aufgabe wird durch eine Horizontalspritzgießmaschine mit den Merkmalen der nebengeordneten Ansprüche 10 und 12 gelöst.

Dadurch, dass zwischen der Grundplatte und dem Drehteller ein Lager angeordnet ist, das ein der Grundplatte zugeordnetes drehfestes Lagerteil und ein dem Drehteller zugeordnetes drehbares Lagerteil aufweist, und der Drehteller zwischen einer unteren Position, in der der Drehteller auf der Grundplatte aufliegt und das Lager entlastet ist, und einer oberen Position, in der der Drehteller von der Grundplatte abgehoben ist und sich auf dem drehbaren Lagerteil abstützt, bewegbar ist, kann ein ständig vorhandenes Lager vorgesehen werden, wobei das Lager nur während der Drehung belastet ist und während des Spritzvorgangs unbelastet bleibt. Damit ist sichergestellt, dass während des Spritzvorgangs auftretende Querkräfte, wie sie insbesondere beim Spritzprägen auftreten können, nicht über das Lager in das Maschinenbett abgeleitet werden, sondern im wesentlichen nur über den vollflächigen Kontakt des Drehtellers mit der Grundplatte.

Das drehbare Lagerteil kann an dem Drehteller befestigt und das Lager als Ganzes in vertikaler Richtung bewegbar sein. Hierzu kann an dem drehfesten Lagerteil ein Hubelement befestigt sein, das in einer Ausnehmung in der Grundplatte, insbesondere in einer Ringnut, zwischen einer oberen und einer unteren Position auf und ab bewegbar ist, so dass das Hubelement eine Auf- und Abbewegung des Lagers und damit des Drehtellers bewirken kann. Zwischen der Unterseite des Hubelements und dem Boden der Ausnehmung, insbesondere dem Boden der Ringnut, kann ein Spalt vorgesehen werden, in den ein Druckmedium zu- und abgeführt werden kann, um das Hubelement zu betätigen.

Alternativ zu der vorbeschriebenen Ausführungsform kann an dem Drehteller ein Hubelement vorgesehen sein, das zwischen einer oberen Position, in der das Hubelement mit dem drehbaren Lagerteil einen Abstand bildet, wobei der Drehteller auf der Grundplatte aufliegt, und einer unteren Position, in der das Hubelement auf dem drehbaren Lagerteil aufsitzt, wobei der Drehteller von der Grundplatte abgehoben ist, bewegbar ist. Hierzu kann das Hubelement in einer Nut an der Unterseite des Drehtellers angeordnet sein und zwischen der Oberseite des Hubelements und dem Boden der Nut ein Spalt gebildet werden, in den ein Druckmedium zu- und abgeführt werden kann. Bei Zufuhr des Druckmediums wird das Hubelement aus der Nut ausgefahren und kommt auf Anschlag mit dem drehbaren Lagerteil. Bei weiterer Zufuhr von Druckmedium wird der Drehteller von der Grundplatte abgehoben und stützt sich über das Hublement auf dem drehbaren Lagerteil ab.

Als Lager kann ein Wälzlager vorgesehen werden, wobei zwischen dem drehfesten und dem drehbaren Lagerteil Kugeln oder Rollen als Wälzkörper vorgesehen sind. Das Lager kann aber auch als Gleitlager ausgebildet sein, wobei zwischen dem drehfesten und dem drehbaren Lagerteil eine Gleitfläche vorgesehen ist.

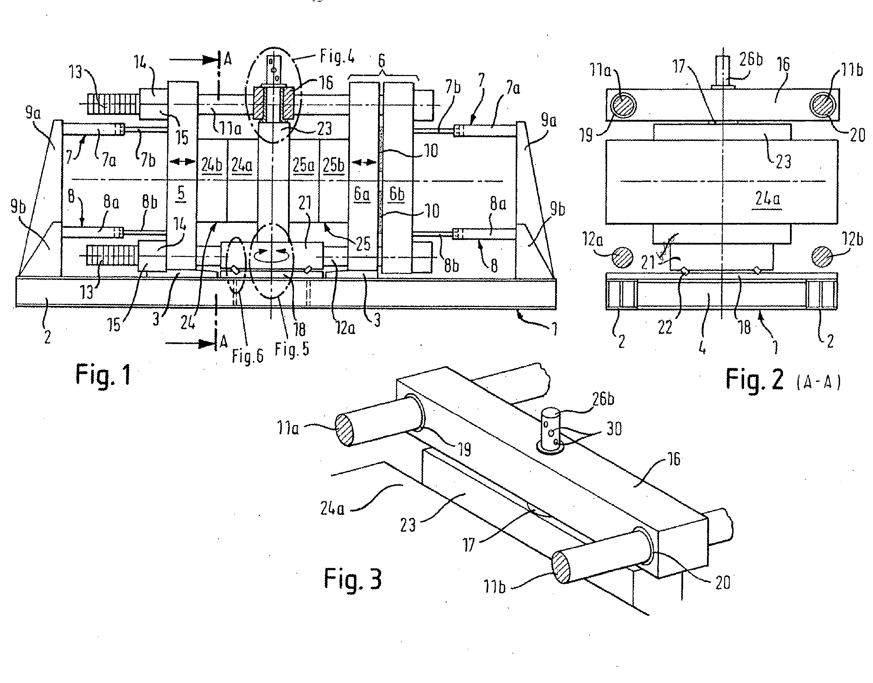

Nachfolgend soll die Erfindung anhand von Ausführungsbeispielen und unter Bezugnahme auf die Figuren 1 bis 16 näher beschrieben werden.

Eine erste Ausführungsform der Erfindung soll unter Bezugnahme auf die Figuren 1 bis 7 anhand einer Zwei-Platten-Horizontalspritzgießmaschine mit einer mittig angeordneten stationären Dreheinrichtung beschrieben werden. Auf einem Maschinenbett 1 mit zwei Längsträgern 2 sowie Querstreben 4 sind zwei Formaufspannplatten 5 und 6 auf massiven Gleitschuhen 3 verschieblich abgestützt. Die beiden Formaufspannplatten 5 und 6 können mittels diagonal zueinander angeordneter hydraulischer Stellantriebe 7 (oben) und 8 (unten) verfahren werden. Diese sind einerseits (beispielsweise mit den Zylindern 7a, 8a) an mit dem Maschinenbett verbundenen Stützstreben 9a und 9b und andererseits (beispielsweise mit ihren Kolbenstangen 7b, 8b) an den Formaufspannplatten befestigt. Die Formaufspannplatte 6 selbst besteht aus der eigentlichen Formaufspannplatte 6a und einer Druckplatte 6b, zwischen denen vier Druckkissen 10 zum Aufbringen des Schließdrucks vorgesehen sind, wobei in der Figur 1 nur die hinteren Druckkissen sichtbar sind. Zwischen den beiden Formaufspannplatten sind oben und unten jeweils zwei parallel zueinander und in einer Ebende liegende Säulen 11a,11b und 12a,12b befestigt, von denen in der Figur 1 nur die hinteren Säulen 11a und 12a sichtbar sind. Diese Säulen durchsetzen die in der Figur 1 linke Formaufspannplatte 5 und weisen an ihrem überstehenden Ende Rillen 13 auf, in die halbschalenförmige Verriegelungsbacken 14 und 15 eingefahren werden können. In dem in Figur 1 dargestellten Zustand sind die Verriegelungsbacken zugefahren und die Schließeinheit verriegelt. Auf einer auf oder in dem Maschinenbett 1 befestigten Grundplatte 18 ist ein Drehteller 21 mittels eines geeigneten Lagers, vorliegend eines Kreuzrollenlagers 22, abgestützt und um eine vertikale Achse drehbar gelagert. Auf dem Drehteller 21 ist ein Formhälftenträger 23, der im vorliegenden Beispeil als sogenannte Wendeplatte ausgebildet ist, befestigt und trägt Formhälften 24a und 25a von zwei Spritzgießformen 24 und 25. Die korrespondierenden Formhälften 24b und 25b sind auf den Formaufspannplatten 5 und 6a angebracht.

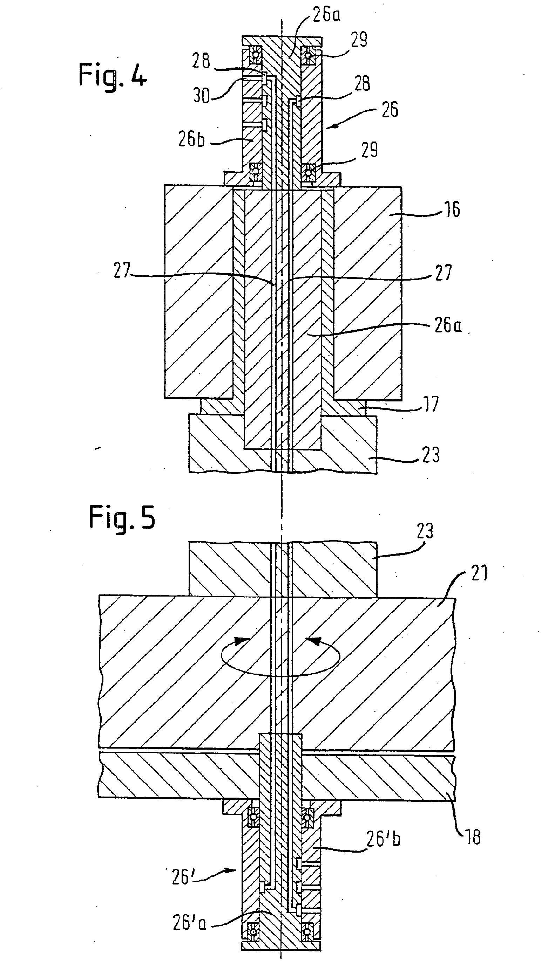

Oberhalb der Wendeplatte 23 ist ein Joch 16 über eine erste Gleitbuchse 17 auf der Oberseite der Wendeplatte 23 dieser gegenüber drehbar gelagert. Die Säulen 11a und 11 b sind durch weitere Gleitbuchsen 19 und 20 in passenden Bohrungen durch das Joch 16 hindurchgeführt. Je nach Anordnung der Gleitbuchsen 17, 19 und 20 kann das Gewicht des Jochs 16 von den Säulen 11 a, 11 b oder von der Wendeplatte 23 getragen werden. Die erste Gleitbuchse 17 erstreckt sich durch eine passende Ausnehmung in der Mitte des Jochs 16 und dient zur Durchführung eines Drehverteilers bzw. einer Drehdurchführung 26 für die Zufuhr von Medien wie Wasser, Öl, Luft, Strom oder sonstiges zu der Wendeplatte 23 und den Formhälften 24a, 25a (zu Einzelheiten zu diesem oberen Drehverteiler 26 siehe Figur 4). Das Innenteil 26a ist fest mit der Wendeplatte 23 verbunden und enthält Kanäle 27, die oberhalb des Jochs 16 in umlaufenden Ringnuten 28 enden und über die die gewünschten Medien zu den Formhälften zu- und abgeführt werden können. Das Aussenteil 26b ist auf dem Joch 16 befestigt und mittels oberer und unterer Lager 29 gegenüber dem Innenteil 26b drehbar gelagert. In dem Aussenteil 26 sind Anschlusskanäle 30 vorgesehen, die in die Ringnuten 28 des Innenteils 26a münden und an die Leitungen für die jeweiligen Medien angeschlossen werden können.

Ein weiterer Drehverteiler 26' ist unterhalb der Wendeplatte 23 vorgesehen und in der Figur 5 näher dargestellt. Es handelt sich um den gleichen Typ von Drehverteiler wie der oberhalb der Wendeplatte 23 angeordnete obere Drehverteiler 26. Das Innenteil 26'a ist fest mit dem Drehteller 21 oder der Wendeplatte 23 verbunden und das Aussenteil 26'b ist fest mit der Grundplatte 18 verbunden und gegenüber dem Innenteil mittels mehrerer Lager drehbar gelagert.

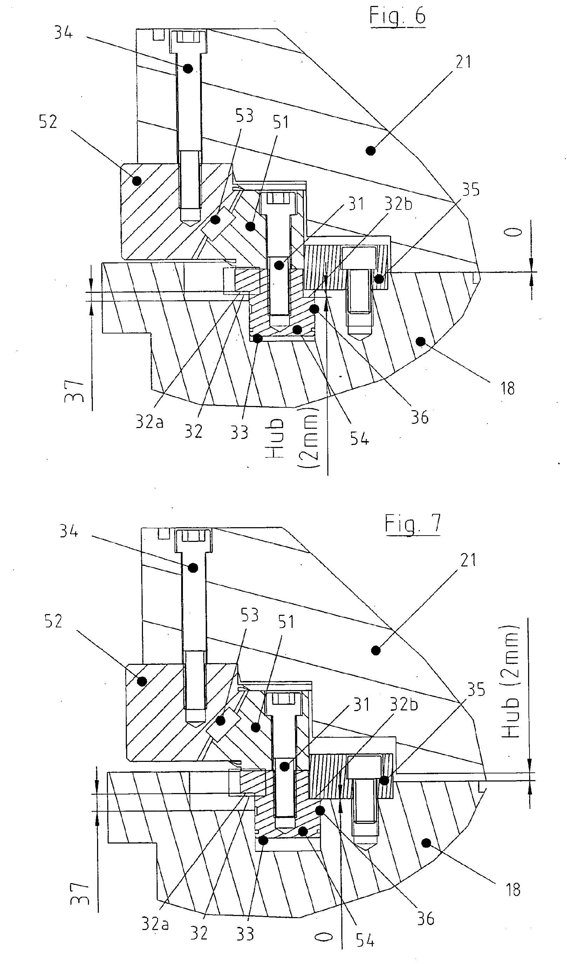

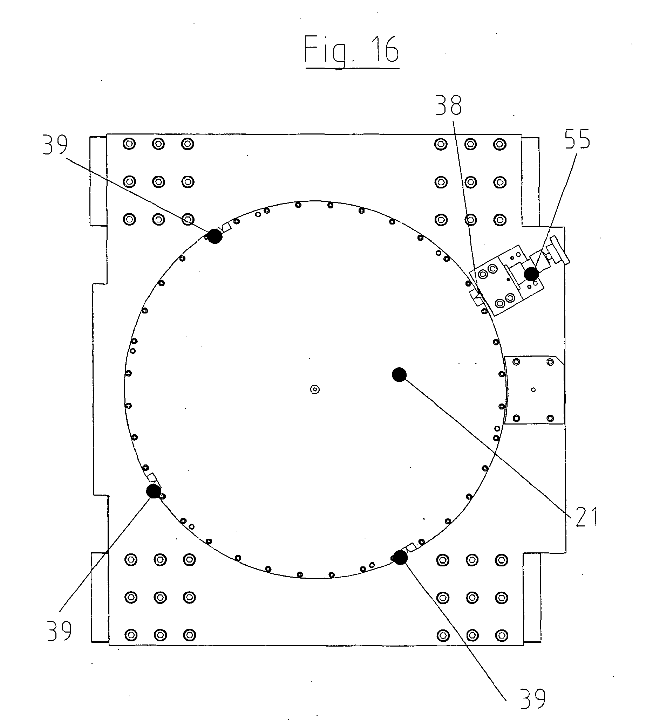

In den Figuren 6 und 7 ist eine erste Ausführungsform der erfindungsgemäßen Dreheinrichtung in vergrößertem Maßstab im Teilschnitt darstellt. Die Figur 6 zeigt die Situation während des Einspritzens, d.h. bei abgesenktem und auf der Gundplatte 18 aufliegendem Drehteller 21, wohingegen die Figur 7 die Situation unmittelbar vor oder während der Drehung zeigt, d.h. bei von der Grundplatte 18 abgehobenem Drehteller 21. Das Kreuzrollenlager weist ein drehfestes Lagerteil 51 und ein drehbares Lagerteil 52 auf, zwischen denen Rollen 53 angeordnet sind. Das drehbare Lagerteil 51 ist mittels Schrauben 34 an dem Drehteller 21 befestigt, wohingegen zwischen dem drehfesten Lagerteil 51 und dem Drehteller 21 ein kleiner Abstand vorliegt, so dass sich der Drehteller frei an dem drehfesten Lagerteil 51 vorbeibewegen kann. An der Unterseite des drehfesten Lagerteils 51 ist ein ringförmiges Hubelement 54 mittels Schrauben 31 befestigt und ragt in eine in der Grundplatte 18 eingelassene Ringnut. Der aus der Ringnut nach oben herausragende obere Bereich 32 des Hubelements 54 ist dabei so gestaltet, dass er an seiner Außenseite einen Rand 32a aufweist, zwischen dessen Unterseite und der Oberseite der Grundplatte stets ein Spalt 37 verbleibt. Für Montagezwecke kann der Rand 32a auf der Grundplatte 18 abgesetzt werden. An seiner Innenseite weist der obere Bereich 32 des Hubelements 54 einen Absatz mit einer Anschlagfläche 32b auf. Die Tiefe der Ringnut in der Grundplatte ist so bemessen, dass unterhalb des Hubelements 54 ein Spalt 33 vorliegt, wenn der Drehteller 21 auf der Grundplatte 18 aufliegt. In diesen Spalt kann ein Druckmedium, beispielsweise ein Hydrauliköl oder Druckluft, über hier nicht näher dargestellte Leitungen zu- und abgeführt werden. Um ein Austreten des Druckmediums aus der Ringnut zu verhindern, sind Dichtungsringe 36 in entsprechende Nuten in das Hubelement 54 eingesetzt. Bei Zufuhr des Druckmediums in den Spalt 33 kann das Hubelement 54 um eine Strecke angehoben werden, bis es mit seiner Anschlagfläche 32b an einen Anschlag 35 anstößt. Befindet sich das Hubelement 54 in seiner unteren Position, liegt der Drehteller 21 vollflächig auf der Grundplatte 18 auf und das Kreuzrollenlager 22 ist vollständig entlastet (Figur 6). Um den Drehteller 21 und die auf diesem angebrachten Formhälften von Spritzgießwerkzeugen zu drehen, wird zunächst das Druckmedium in den Spalt 33 eingeleitet und das Hubelement 54 nach oben bewegt, wobei der Drehteller 21 von der Grundplatte 18 abgehoben und die Position gemäß Figur 7 eingenommen wird. Im dargestellten Beispiel kann ein Hub von 2mm ausgeführt werden. Anschließend kann die Drehbewegung in Gang gesetzt werden und der Drehteller 21 mit allen seinen Aufbauten um eine vertikale Achse gedreht werden. Sobald die gewünschte Position erreicht ist, beispielsweise nach Beendigung einer 180°-Drehung, kann das Druckmedium aus dem Spalt 33 abgeführt und der Drehteller 21 auf der Grundplatte 18 abgesetzt werden, so dass die Position gemäß Figur 6 wieder eingenommen wird. Das Lager 22 ist somit nur während der Drehbewegung belastet und nicht während des eigentlichen Spritz- oder Spritzprägevorgangs. Wie in der Figur 16 zu sehen ist, können zur Fixierung der Lage des Drehtellers in Umfangsrichtung Bolzen 38 vorgesehen werden, die mittels einer Kolben-Zylinder-Einheit 55 in passende Öffnungen 39 am Außenumfang des Drehtellers 21 ein- und ausgefahren werden können, um so eine formschlüssige Verbindung zwischem dem Bolzen 38 und dem Drehteller 21 herzustellen und die Position des Drehtellers in Umfangsrichtung zu fixieren. Die Stabilisierung der vertikalen Achse nach dem Abheben des Drehtellers von der Grundplatte wird dadurch gewährleistet, dass der auf dem Drehteller befestigte Formhälftenträger 23 über die Gleitbuchse 17 und den oberen Drehverteiler 26 in dem Joch 16 in seiner Lage fixiert ist. Daher kann es auch dann nicht zu einem Kippen des Drehtellers kommen, wenn das Hubelement 54 nur ein vergleichsweise geringes Stück in die Ringnut eintauchen kann, beispielsweise wenn die Ringnut nur eine begrenzte Tiefe aufweisen darf, um die Grundplatte 18 nicht zu dick und damit unnötig schwer werden zu lassen.

Anstelle des hier beschriebenen Kreuzrollenlagers können auch andere geeignete Lager vorgesehen werden, beispielsweise Kugellager oder Gleitlager. Als Drehantrieb können an sich bekannte und daher hier nicht näher dargestellte und beschriebene Drehantriebe vorgesehen werden. Beispielsweise kann am Aussenumfang des Drehtellers ein Zahnkranz vorgesehen werden, in das ein von einem Elektro- oder Hydromotor antreibbares Zahnrad eingreift.

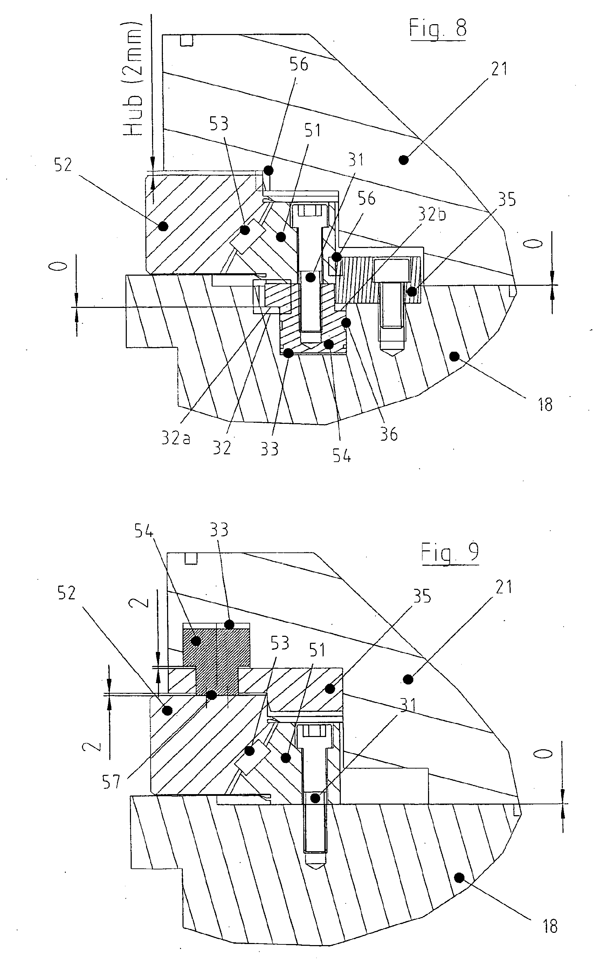

Die Fig. 8 zeigt eine zweite Ausführungsform der erfindungsgemäßen Dreheinrichtung in der Situation, dass der Drehteller 21 auf der Grundplatte 18 abgesenkt ist. Das Lager, beispielsweise als Kreuzrollenlager, weist ein drehfestes Lagerteil 51 und ein drehbares Lagerteil 52 auf, zwischen denen Rollen 53 angeordnet sind. Das drehbare Lagerteil 52 bildet einen Spalt mit der Unterseite des Drehteller 21. Über den Umfang verteilt sind an einer oder mehreren Positionen Verzahnungen 56 zwischen dem drehbaren Lagerteil 52 und dem Drehteller 21 vorgesehen. Damit wird einerseits in Umfangsrichtung eine formschlüssige Verbindung zwischen dem drehbaren Lagerteil 52 und dem Drehteller 21 gebildet; andererseits ist aber in vertikaler Richtung eine Relativbewegung zwischen dem drehbaren Lagerteil 52 und dem Drehteller 21 möglich. Das drehfeste Lagerteil 51 ist wie im ersten Ausführungsbeispiel an dem in einer Ringnut auf- und abbewegbaren Hubelement 54 befestigt. Auch hier sind am Aussenumfang zwischen dem drehfesten Lagerteil 51 und der Grundplatte 18 an einer oder mehreren Positionen Verzahnungen 56 vorgesehen (vorliegend zwischen dem drehfesten Lagerteil 51 und dem Anschlag 35), die eine formschlüssige Verbindung in Umfangsrichtung bilden und in vertikaler Richtung eine Relativbewegung zwischen dem drehfesten Lagerteil 51 und der Grundplatte 18 möglich machen. Ausgehend von der in der Figur 8 dargestellten abgesenkten Position des Lagers wird ein Druckmedium in den Spalt 33 eingeleitet, wodurch das Lager angehoben und in Kontakt mit der Unterseite des Drehtellers 21 kommt. Bei weiterer Zufuhr von Druckmedium wird das Lager zusammen mit dem Drehteller 21 weiter nach oben verfahren und der Drehteller von der Grundplatte 18 abgehoben. Diese Vertikalbewegung wird wie im ersten Ausführungsbeispiel durch den Anschlag 35 begrenzt. In diesem abgehobenem Zustand kann die Drehung des Drehtellers 21 ausgeführt werden. Nach deren Beendigung wird das Druckmedium aus dem Spalt 33 abgeführt, so dass sich das Lager zusammen mit dem Drehteller nach unten bewegt, bis der Drehteller wieder auf der Grundplatte aufliegt. Durch weiteres Verfahren des Hubelements 54 nach unten; d.h. durch weiteres Ablassen von Druckmedium aus dem Spalt 33, wird das Lager von dem Drehteller wegbewegt, bis es wieder einen Spalt mit der Unterseite des Drehtellers bildet und damit entlastet ist. In dem entlasteten Zustand können nunmehr Spritz- oder Spritzprägevorgänge ausgeführt werden. In dem in der Figur 8 dargestellten Beispiel beträgt der Spalt 2 mm.

Die Fig. 9 zeigt eine dritte Ausführungsform der erfindungsgemäßen Dreheinrichtung in der Situation, dass der Drehteller 21 auf der Grundplatte 18 abgesenkt ist. Das Lager, beispielsweise als Kreuzrollenlager, weist ein drehfestes Lagerteil 51 und ein drehbares Lagerteil 52 auf, zwischen denen Rollen 53 angeordnet sind. Das drehfeste Lagerteil 51 ist mittels Schrauben 31 fest mit der Grundplatte 18 verschraubt. An der Unterseite des Drehtellers 21 ist ein ringförmiges Hubelement 54 mit einem T-Querschnitt in einer umlaufenden Ringnut eingelassen und bildet mit dem Boden der Ringnut einen Spalt 33. Ein Anschlag 35 begrenzt die Strecke, um die das Hubelement 54 aus der Ringnut nach unten bewegt werden kann, wenn ein Druckmedium in den Spalt 33 eingeleitet wird. Ausgehend von der in der Figur 9 dargestellten abgesenkten Position des Drehtellers 21 wird ein Druckmedium in den Spalt 33 eingeleitet, wodurch das Hubelement 54 nach unten verfahren wird, bis es auf dem drehbaren Lagerteil 52 aufliegt. Bei weiterer Zufuhr von Druckmedium wird der Spalt 33 vergrößert und der Drehteller 21 nach oben verfahren und von der Grundplatte 18 abgehoben. Diese Vertikalbewegung wird durch den Anschlag 35 begrenzt. In diesem abgehobenem Zustand kann die Drehung des Drehtellers 21 ausgeführt werden. Nach deren Beendigung wird das Druckmedium aus dem Spalt 33 abgeführt, so dass sich der Drehteller nach unten bewegt, bis er wieder auf der Grundplatte aufliegt. Durch weiteres Verfahren des Hubelements 54 nach oben wird dieses von dem drehbaren Lagerteil 52 wegbewegt, bis es wieder einen Spalt mit diesem bildet und das Lager somit entlastet ist. In dem entlasteten Zustand können nunmehr Spritz- oder Spritzprägevorgänge ausgeführt werden. In dem in der Figur 9 dargestellten Beispiel beträgt der Spalt 2 mm. In dem Ausführungsbeispiel gemäß Figur 9 ist es erforderlich, dass die Medien (Hydraulik, Elektrik, Pneumatik) zum Anheben des Drehtellers 21 in diesen geleitet werden müssen. Dieser Aspekt ist bei der Auslegung der Drehdurchführung 26' zu berücksichtigen. Gegebenenfalls können zusätzliche Maßnahmen ergriffen werden, um die Gefahr eines Gleitens zwischen der Unterseite des Hubelements 54 und der Oberseites des drehbaren Lagerteils 52 zu unterbinden. Beispielsweise könnten Stifte 57 in dem Hubelement 54 eingelassen sein, die in passenden vertikalen Bohrungen in dem drehbaren Lagerteil 52 verschieblich sind.

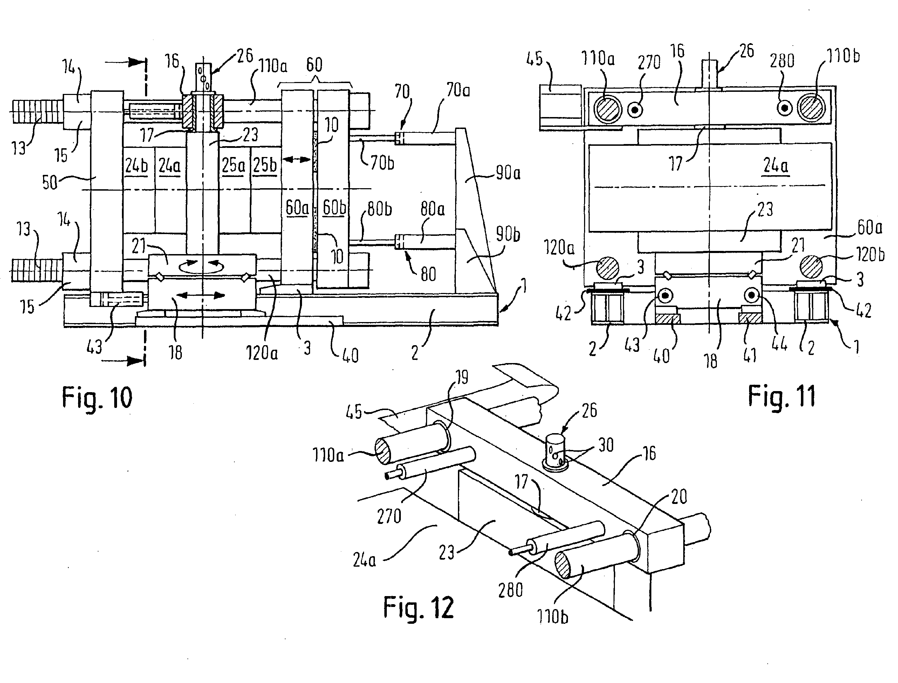

Eine weitere Ausführungsform der Erfindung soll unter Bezugnahme auf die Figuren 10 bis 12 beschrieben werden. Im Unterschied zu den oben beschriebenen Ausführungsformen ist eine der Formaufspannplatten fest auf dem Maschinenbett 1 installiert, vorliegend die linke Formaufspannplatte, und die Dreheinrichtung kann entlang der Maschinenlängsachse verfahren werden. Auf einem Maschinenbett 1 ist eine feststehende Formaufspannplatte 50 befestigt und eine bewegliche Formaufspannplatte 60 auf Gleitschuhen 3 und geeigneten Linearführungen 42 verschieblich abgestützt. Die bewegliche Formaufspannplatte 60 kann mittels diagonal zueinander angeordneter hydraulischer Stellantriebe 70 und 80 verfahren werden. Diese sind einerseits (beispielsweise mit den Zylindern 70a, 80a) an mit dem Maschinenbett verbundenen Stützstreben 90a und 90b und andererseits (beispielsweise mit ihren Kolbenstangen 70b, 80b) an der beweglichen Formaufspannplatte 60 befestigt. Die Formaufspannplatte 60 selbst besteht wie in den zuvor beschriebenen Beispielen aus der eigentlichen Formaufspannplatte 60a und einer Druckplatte 60b, zwischen denen vier Druckkissen 10 zum Aufbringen des Schließdrucks vorgesehen sind, wobei in der Figur nur die hinteren Druckkissen sichtbar sind. In der beweglichen Formaufspannplatte 60 sind oben und unten jeweils zwei parallel zueinander und in einer Ebende liegende Säulen 110a,110b und 120a,120b befestigt, von denen in der Figur 10 nur die hinteren Säulen 110a und 120a sichtbar sind. Diese Säulen durchsetzen die feststehende Formaufspannplatte 50 und weisen an ihrem überstehenden Ende Rillen 13 auf, in die Verriegelungsbacken 14, 15 eingefahren werden können. Auf weiteren Linearführungen 40 und 41 ist die Grundplatte 18 der Dreheinrichtung mittels hydraulischer Stellantriebe 43 und 44 parallel zur Maschinenlängsachse verfahrbar. Der Aufbau der Dreheinrichtung selbst ist im übrigen identisch mit den Ausführungsformen gemäß den Figuren 1 bis 9.

Oberhalb der Wendeplatte 23 ist ein Joch 16 über eine erste Gleitbuchse 17 drehbar gegenüber der Wendeplatte 23 gelagert. Die Säulen 110a und 110b sind durch weitere Gleitbuchsen 19 und 20 in passenden Bohrungen durch das Joch 16 hindurchgeführt. Je nach Anordnung der Gleitbuchsen 17, 19 und 20 kann das Gewicht des Jochs 16 von den Säulen 110a, 110b oder von der Wendeplatte 23 getragen werden. Die erste Gleitbuchse 17 erstreckt sich durch eine passende Ausnehmung in der Mitte des Jochs 16 und dient zur Durchführung eines Drehverteilers 26 für die Zufuhr von Medien wie Wasser, Öl, Luft, Strom oder sonstiges. Der Drehverteiler selbst entspricht demjenigen gemäß den Figuren 1 bis 5. Mittels eines an dem Joch 16 angebrachten Kabelschlepp 45 können die hier nicht dargestellten zu den Anschlüssen 30 in dem Drehverteiler führenden Versorgungsleitungen für die Medien die Verfahrbewegung der Dreheinrichtung flexibel mitmachen. Zwischen dem Joch 16 und der feststehenden Formaufspannplatte 50 sind im Abstand zu dem Drehverteiler 26 zwei hydraulische Stellantriebe 270 und 280 vorgesehen. Im Zusammenwirken mit den unterhalb der Wendeplatte 23 an der Grundplatte 18 angreifenden Stellantrieben 43 und 44 kann die gesamte Dreheinrichtung ohne Gefahr von Verkippungen beim Anfahren und Abbremsen entlang der Maschinenlängsachse verfahren werden. Daher müssen die Linearführungen 40, 41 nicht mit einem speziellen die Kippmomente aufnehmenden Querschnitt wie beispielsweise einem Schwalbenschwanzquerschnitt ausgeführt sein.

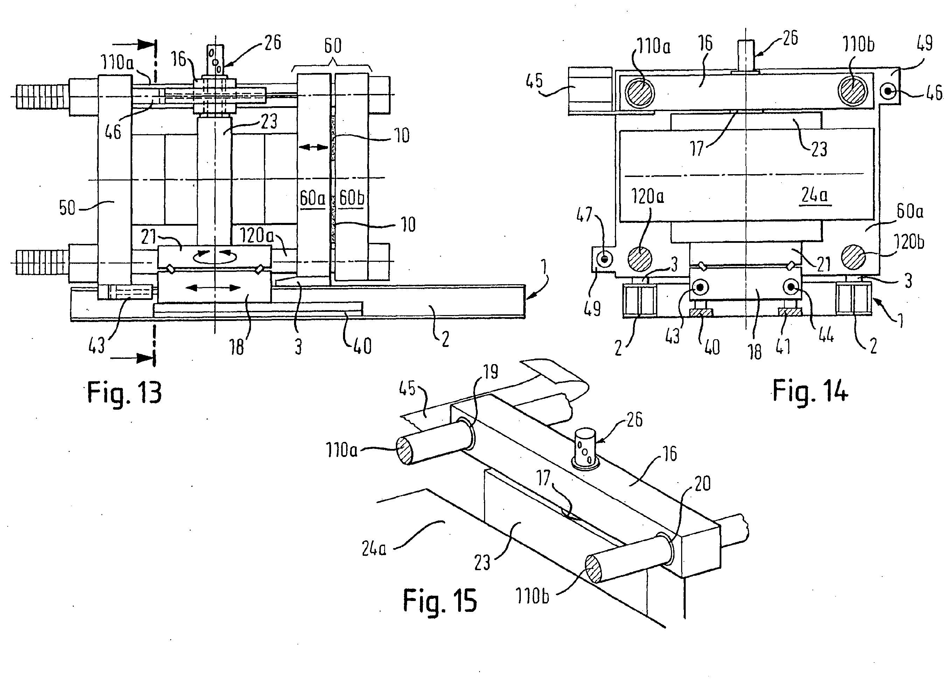

Eine Abwandlung der zuvor beschriebenen Zwei-Platten-Horizontalspritzgießmaschine ist in den Figuren 13 bis 15 dargestellt. In dieser Ausführungsform wird die Dreheinrichtung nur mittels der an der Grundplatte angreifenden Stellantriebe 43 und 44 verfahren und zwischen dem Joch 16 und der feststehenden Formaufspannplatte 50 sind keine Stellantriebe montiert. In diesem Fall kann es je nach Maschinengröße vorteilhaft sein, wenn die Linearführungen 40 und 41 einen Schwalbenschwanzquerschnitt oder dergleichen aufweisen. Ein weiterer Unterschied besteht darin, dass die Verfahrbewegung der beweglichen Formaufspannplatte 60 durch zwei diagonal zueinander angeordnete hydraulische Stellantriebe 46 und 47 bewerkstelligt wird, die einerseits an der feststehenden Formaufspannplatte 50 und andererseits an der beweglichen Formaufspannplatte 60 an Laschen 49 befestigt sind. Im übrigen sind der Aufbau und die Wirkungsweise dieser Zwei-Platten-Horizontalspritzgießmaschine mit derjenigen aus den Figuren 10 bis 12 identisch.

### Bezugszeichenliste

- 1: Machinenbett
- 2: Längsträger
- 3: Gleitschuhe
- 4: Querstreben
- 5: Formaufspannplatte
- 6: Formaufspannplatte
- 6a: Vordere Platte der Formaufspannplatte (eigentliche Formaufspannplatte)
- 6b: Druckplatte
- 7, 8: Hydraulische Stellantriebe
- 7a, 8a: Hydraulikzylinder
- 7b, 8b: Kolbenstange
- 9a, 9b: Stützstreben
- 10: Druckkissen
- 11a, 11b: Obere Säulen
- 12a, 12b: Untere Säulen
- 13: Rillen
- 14, 15: Verriegelungsbacken
- 16: Joch
- 17: erste Gleitbuchse
- 18: Grundplatte
- 19, 20: Gleitbuchsen an Säulen
- 21: Drehteller
- 22: Kreuzrollenlager
- 23: Formhälftenträger bzw. Wendeplatte
- 24: Erstes Spritzgießwerkzeug
- 24a, 24b: Formhälften des ersten Spritzgießwerkzeugs
- 25: Zweites Spritzgießwerkzeug
- 25a, 25b: Formhälften des zweiten Spritzgießwerkzeugs
- 26: Oberer Drehverteiler
- 26a: Mitrotierendes Innenteil des oberen Drehverteilers
- 26b: Feststehendes Aussenteil des oberen Drehverteilers
- 26': Unterer Drehverteiler
- 26'a: Innenteil des unteren Drehverteilers
- 26'b: Aussenteil des unteren Drehverteilers
- 27: Kanäle
- 28: Ringnuten
- 29: Lager
- 30: Anschlußkanäle
- 31: Schrauben
- 32: Oberer Rand des Hubelements
- 32a: Äußerer Rand von 32
- 32b: Anschlagfläche von 32
- 33: Spalt
- 34: Schrauben
- 35: Anschlag
- 36: Dichtungsringe
- 37: Spalt zwischen Lager bzw. Hubelement und Grundplatte
- 38: Bolzen
- 39: Ausnehmungen
- 40, 41: Linearführungen für Grundplatte
- 42: Linearführungen für bewegliche Formaufspannplatte
- 43, 44: Hydraulische Stellantriebe
- 45: Kabelschlepp
- 46, 47: Hydraulische Stellantriebe
- 49: Befestigungslaschen
- 50: Feststehende Formaufspannplatte
- 51: Drehfestes Lagerteil
- 52: Drehbares Lagerteil
- 53: Rollen
- 54: Hubelement
- 55: Kolben-Zylinder-Einheit
- 60: Bewegliche Formaufspannplatte
- 60a: Eigentliche Formaufspannplatte
- 60b: Druckplatte
- 70, 80: Hydraulische Stellantriebe
- 70a, 80a: Hydraulikzylinder
- 70b, 80b: Kolbenstangen
- 90a, 90b: Stützstreben
- 110a, b: Obere Säulen
- 120a, b: Untere Säulen
- 270: Hydraulischer Stellantrieb
- 280: Hydraulischer Stellantrieb

## Patentansprüche

1. Dreheinrichtung für eine Horizontalspritzgiessmaschine, umfassend eine Grundplatte (18), auf der ein um eine vertikale Achse drehbarer Drehteller (21) angeordnet ist und zwischen der Grundplatte (18) und dem Drehteller (21) ein Lager (22) angeordnet ist, sowie Antriebsmittel zum Drehen des Drehtellers (21),
**dadurch gekennzeichnet, dass**
das Lager (22) ein der Grundplatte (18) zugeordnetes drehfestes Lagerteil (51) und ein dem Drehteller (21) zugeordnetes drehbares Lagerteil (52) aufweist, und dass der Drehteller (21) zwischen einer unteren Position, in der der Drehteller (21) auf der Grundplatte (18) aufliegt und das Lager (22) entlastet ist und einer oberen Position, in der der Drehteller (21) von der Grundplatte (18) abgehoben ist und sich auf dem drehbaren Lagerteil (52) abstützt, bewegbar ist.

2. Dreheinrichtung nach Anspruch 1,
**dadurch gekennzeichnet, dass**
das das drehbare Lagerteil (52) an dem Drehteller (21) befestigt und das Lager in vertikaler Richtung bewegbar ist.

3. Dreheinrichtung nach Anspruch 2,
**dadurch gekennzeichnet, dass**
an dem drehfesten Lagerteil (51) ein Hubelement (54) befestigt ist, das in einer Ausnehmung in der Grundplatte (18) insbesondere in einer Ringnut, zwischen einer oberen und einer unteren Position auf und ab bewegbar ist.

4. Dreheinrichtung nach Anspruch 3,
**dadurch gekennzeichnet, dass**
zwischen der Unterseite des Hubelements (54) und dem Boden der Ausnehmung, insbesondere dem Boden der Ringnut, ein Spalt (37) vorliegt, in den ein Druckmedium zu- und abgeführt werden kann.

5. Dreheinrichtung nach Anspruch 1,
**dadurch gekennzeichnet, dass**
an dem Drehteller (21) ein Hubelement (54) vorgesehen ist, das zwischen einer oberen Position, in der das Hubelement (54) mit dem drehbaren Lagerteil (52) einen Abstand bildet, wobei der Drehteller (21) auf der Grundplatte (18) aufliegt, und einer unteren Position, in der das Hubelement (54) auf dem drehbaren Lagerteil (52) aufsitzt, wobei der Drehteller (21) von der Grundplatte (18) abgehoben ist, bewegbar ist.

6. Dreheinrichtung nach Anspruch 5,
**dadurch gekennzeichnet, dass**
das Hubelement (54) in einer Nut an der Unterseite des Drehtellers angeordnet ist und zwischen der Oberseite des Hubelements und dem Boden der Nut ein Spalt (37) vorliegt, in den ein Druckmedium zu- und abgeführt werden kann.

7. Dreheinrichtung nach einem der Ansprüche 1 bis 6,
**dadurch gekennzeichnet, dass**
das Lager (22) als Wälzlager ausgebildet ist, wobei zwischen dem drehfesten und dem drehbaren Lagerteil Kugeln oder Rollen als Wälzkörper vorgesehen sind.

8. Dreheinrichtung nach einem der Ansprüche 1 bis 6,
**dadurch gekennzeichnet, dass**
das Lager (22) als Gleitlager ausgebildet ist, wobei zwischen dem drehfesten und dem drehbaren Lagerteil eine Gleitfläche vorgesehen ist.

9. Dreheinrichtung nach einem der vorangehenden Ansprüche,
**dadurch gekennzeichnet, dass**
zwischen dem drehbaren Lagerteil (52) und dem Drehteller (21) eine formschlüssige und/oder eine kraftschlüssige Verbindung besteht oder für die Durchführung der Drehbewegung herstellbar ist.

10. Horizontalspritzgießmaschine mit zwei auf einem Maschinenbett (1) entlang einer Maschinenlängsachse verfahrbaren Formaufspannplatten,
**gekennzeichnet durch**
eine zwischen den äußeren Formaufspannplatten (50,60a/b) ortsfest angeordnete Dreheinrichtung nach einem der Ansprüche 1 bis 9.

11. Horizontalspritzgießmaschine nach Anspruch 10,
**dadurch gekennzeichnet, dass**
die Horizontalspritzgießmaschine wenigstens zwei obere Säulen (110a/b) aufweist, auf denen ein Joch (16) mit einer Ausnehmung angeordnet ist, dass auf dem Drehteller (21) ein Formhälftenträger zur Aufnahme von Formhälften (24a/b,25a/b) von Spritzgießwerkzeugen befestigt ist, und dass auf der Oberseite des Formhätftenträgers ein Drehzapfen vorgesehen ist, der drehbar in der Ausnehmung in dem Joch (16) aufgenommen ist.

12. Horizontalspritzgießmaschine mit einer feststehenden Formaufspannplatte sowie mit einer entlang einer Maschinenlängsachse beweglichen Formaufspannplatte, **gekennzeichnet durch**
eine zwischen den beiden Formaufspannplatten angeordnete und parallel zu der Maschinenlängsachse verfahrbaren Dreheinrichtung nach einem der Ansprüche 1 bis 9.

13. Horizontalspritzgießmaschine nach Anspruch 12,
**dadurch gekennzeichnet, dass**
die Horizontalspritzgießmaschine wenigstens zwei obere Säulen (110a,b) aufweist, auf denen ein Joch (16) mit einer Ausnehmung angeordnet und entlang der Maschinenlängsachse verfahrbar ist, dass auf dem Drehteller (21) ein Formhälftenträger zur Aufnahme von Formhälften von Spritzgießwerkzeugen befestigt ist, und dass auf der Oberseite des Formhälftenträgers ein Drehzapfen vorgesehen ist, der drehbar in der Ausnehmung in dem Joch aufgenommen ist

14. Horizontalspritzgießmaschine nach Anspruch 11 oder 13,
**dadurch** gekenntzeichnet, dass
das Gewicht des Jochs (16) auf den beiden oberen Säulen (110a,b) und/oder auf dem Formhälftenträger abgestützt ist, wobei zwischen dem Joch und den Säulen und/oder zwischen dem Joch (16) und dem Formhälftenträger Gleit- oder Wälzlager vorgesehen sind.

15. Horizontalspritzgießmaschine nach einem der Ansprüche 10 bis 14,
**dadurch gekennzeichnet, dass**
es sich um eine Zwei-Platten-Horizontalspritzgießmaschine handelt und dass die Säulen (110a/b,120a/b) beim Auf- und Zufahren der Formaufspannplatten mitbewegt werden.

16. Horziontalspritzgießmaschine nach einem der Ansprüche 10 bis 14,
**dadurch gekennzeichnet, dass**
es sich um eine Zwei-Platten-Horizontalspritzgießmaschine handelt und dass die Säulen (110a/b,120a/b) beim Auf- und Zufahren der Formaufspannplatten nicht mitbewegt werden.

## Claims

1. Turning device for a horizontal injection moulding machine, comprising a base plate (18) on which a rotary plate (21) is arranged which is rotatable about a vertical axis, and a bearing (22) is arranged between the base plate (18) and the rotary plate (21), and driving means to rotate the rotary plate (21),
**characterized in that**
the bearing (22) has a rotatably fixed bearing part (51) associated with the base plate (18) and a rotatable bearing part (52) associated with the rotary plate (21), and that the rotary plate (21) is movable between a lower position, in which the rotary plate (21) rests on the base plate (18) and the bearing (22) is relieved of loading, and an upper position, in which the rotary plate (21) is raised from the base plate (18) and rests on the rotatable bearing part (52).

2. Turning device according to Claim 1,
**characterized in that**
the rotatable bearing part (52) is fastened on the rotary plate (21) and the bearing is movable in vertical direction.

3. Turning device according to Claim 2,
**characterized in that**
a lifting element (54) is fastened on the rotatably fixed bearing part (51), said lifting element (54) being movable up and down between an upper and a lower position in a recess in the base plate (18), in particular in an annular groove.

4. Turning device according to Claim 3,
**characterized in that**
between the underside of the lifting element (54) and the base of the recess, in particular the base of the annular groove, a gap (37) is present, into which a pressure medium can be conveyed in and conveyed away.

5. Turning device according to Claim 1,
**characterized in that**
on the rotary plate (21) a lifting element (54) is provided, which is movable between an upper position, in which the lifting element (54) forms a clearance with the rotatable bearing part (52), wherein the rotary plate (21) rests on the base plate (18), and a lower position, in which the lifting element (54) sits on the rotatable bearing part (52), wherein the rotary plate (21) is raised from the base plate (18).

6. Turning device according to Claim 5,
**characterized in that**
the lifting element (54) is arranged in a groove on the underside of the rotary plate and between the upper side of the lifting element and the base of the groove a gap (37) exists, into which a pressure medium can be conveyed in and conveyed away.

7. Turning device according to one of Claims 1 to 6,
**characterized in that**
the bearing (22) is constructed as a roller bearing, wherein between the rotatably fixed bearing part and the rotatable bearing part, balls or rollers are provided as rolling bodies.

8. Turning device according to one of Claims 1 to 6,
**characterized in that**
the bearing (22) is constructed as a sliding bearing, wherein a sliding surface is provided between the rotatably fixed bearing part and the rotatable bearing part.

9. Turning device according to one of the preceding claims,
**characterized in that**
a form-fitting and/or a force-fitting connection exists between the rotatable bearing part (52) and the rotary plate (21), or is able to be produced to carry out the rotary movement.

10. Horizontal injection moulding machine with two mould clamping plates which are movable on a machine bed (1) along a longitudinal axis of the machine,
**characterized by**
a turning device according to one of Claims 1 to 9, fixedly arranged between the outer mould clamping plates (50, 60 a, b).

11. Horizontal injection moulding machine according to Claim 10,
**characterized in that**
the horizontal injection moulding machine has at least two upper columns (110 a, b), on which a yoke (16) with a recess is arranged, that a mould-half carrier to receive mould halves (24 a, b, 25 a, b) of injection moulding tools is fastened on the rotary plate (21), and that on the upper side of the mould half carrier a pivot pin is provided which is held rotatably in the recess in the yoke (16).

12. Horizontal injection moulding machine with a fixed mould clamping plate and with a mould clamping plate which is movable along a longitudinal axis of the machine,
**characterized by**
a turning device according to one of Claims 1 to 9 arranged between the two mould clamping plates and movable parallel to the longitudinal axis of the machine.

13. Horizontal injection moulding machine according to Claim 12,
**characterized in that**
the horizontal injection moulding machine has at least two upper columns (110 a, b) on which a yoke (16) with a recess is arranged and is movable along the longitudinal axis of the machine, that a mould half carrier to receive mould halves of injection moulding tools is fastened on the rotary plate (21), and that on the upper side of the mould half carrier a pivot pin is provided, which is held rotatably in the recess in the yoke.

14. Horizontal injection moulding machine according to Claim 11 or 13,
**characterized in that**
the weight of the yoke (16) is supported on the two upper columns (110 a, b) and/or on the mould half carrier, wherein sliding or roller bearings are provided between the yoke and the columns and/or between the yoke (16) and the mould half carrier.

15. Horizontal injection moulding machine according to one of Claims 10 to 14,
**characterized in that**
it concerns a two-plate horizontal injection moulding machine and that the columns (110 a, b; 120 a, b) are co-moved with the open-and-close movement of the mould clamping plates.

16. Horizontal injection moulding machine according to one of Claims 10 to 14,
**characterized in that**
it concerns a two-plate horizontal injection moulding machine and that the columns (110 a, b; 120 a, b) are not co-moved with the open-and-close movement of the mould clamping plates.

## Revendications

1. Dispositif rotatif pour machine de moulage par injection horizontale comprenant un plateau de base (18) sur lequel un plateau tournant (21) rotatif sur un axe vertical est placé et un palier (22) est placé entre le plateau de base (18) et le plateau tournant (21), ainsi que des moyens d'entraînement pour faire tourner le plateau tournant (21),
**caractérisé en ce que**
le palier (22) présente une partie de palier fixe (51) attribuée au plateau de base (18) et une partie de palier rotative (52) attribuée au plateau tournant (21) et que le plateau tournant (21) est mobile entre une position inférieure dans laquelle le plateau tournant (21) repose sur le plateau de base (18) et le palier (22) est déchargé et une position supérieure dans laquelle le plateau tournant (21) est relevé par le plateau de base (18) et s'appuie sur la partie de palier rotative (52).

2. Dispositif rotatif selon la revendication 1,
**caractérisé en ce que**
la partie de palier rotative (52) est fixée sur le plateau tournant (21) et que le palier est mobile verticalement.

3. Dispositif rotatif selon la revendication 2,
**caractérisé en ce qu'**
un élément de levage (54) est fixé sur la partie de palier fixe (51) qui est mobile de bas en haut entre une position inférieure et une position supérieure dans un évidement dans le plateau de base (18), en particulier dans une rainure annulaire.

4. Dispositif rotatif selon la revendication 3,
**caractérisé en ce qu'**
entre la face inférieure de l'élément de levage (54) et le fond de l'évidement, en particulier le fond de la rainure annulaire, une fente (37) est présente dans laquelle un moyen de pression peut être alimenté et sorti.

5. Dispositif rotatif selon la revendication 1,
**caractérisé en ce qu'**
un élément de levage (54) est prévu sur le plateau tournant (21) mobile entre une position supérieure dans laquelle l'élément de levage (54) forme un écart avec la partie de palier rotative (52), le plateau tournant (21) reposant sur le plateau de base (18), et une position inférieure dans laquelle l'élément de levage (54) repose sur la partie de palier rotative (52), le plateau tournant (21) étant relevé par le plateau de base (18).

6. Dispositif rotatif selon la revendication 5,
**caractérisé en ce que**
l'élément de levage (54) est disposé dans une rainure sur la face inférieure du plateau tournant et une fente (37) est présente entre la face supérieure de l'élément de levage et le fond de la rainure, dans laquelle un moyen de pression peut être alimenté et sorti.

7. Dispositif rotatif selon l'une des revendications 1 à 6,
**caractérisé en ce que**
le palier (22) est un palier à rouleau, sachant que des billes ou des rouleaux sont prévus comme corps de rouleau entre les parties de palier fixe et rotative.

8. Dispositif rotatif selon l'une des revendications 1 à 6,
**caractérisé en ce que**
le palier (22) est un palier lisse, sachant qu'une surface lisse est prévue entre les parties de palier fixe et rotative.

9. Dispositif rotatif selon l'une des revendications précédentes,
**caractérisé en ce qu'**
entre la partie de palier rotative (52) et le plateau tournant (21), une liaison par complémentarité de forme et/ou une adhérence des forces est présente ou peut être créée pour réaliser le mouvement de rotation.

10. Machine de moulage par injection horizontale comprenant deux plaques de serrage de moule déplaçables sur une table de machine (1) le long d'un axe longitudinal de la machine,
**caractérisée par**
un dispositif rotatif selon l'une des revendications 1 à 9 placé fixement entre les plaques de serrage de moule extérieures (50, 60 a, b).

11. Machine de moulage par injection horizontale selon la revendication 10,
**caractérisée en ce que**
la machine de moulage par injection horizontale présente au moins deux colonnes supérieures (110 a, b) sur lesquelles une entretoise (16) avec un évidement est placée, **en ce que** sur le plateau tournant (21), un support de moitiés de moule pour recevoir des moitiés de moules (24 a, b ; 25 a, b) d'outils de moulage par injection est fixé et **en ce que** sur la face supérieure du support de moitiés de moule, un pivot est prévu, reçu de manière rotative dans l'évidement de l'entretoise (16).

12. Machine de moulage par injection horizontale comprenant une plaque de serrage de moule fixe ainsi qu'une plaque de serrage de moule mobile le long d'un axe longitudinal de la machine,
**caractérisée par**
un dispositif tournant selon l'une des revendications 1 à 9 placé entre les deux plaques de serrage de moule et déplaçable parallèlement à l'axe longitudinal de la machine.

13. Machine de moulage par injection horizontale selon la revendication 12,
**caractérisée en ce que**
la machine de moulage par injection horizontale présente au moins deux colonnes supérieures (110 a, b) sur lesquelles une entretoise (16) avec un évidement est placée et est déplaçable le long de l'axe longitudinal de la machine, **en ce que** sur le plateau tournant (21), un support de moitiés de moule pour recevoir des moitiés de moules d'outils de moulage par injection est fixé et **en ce que** sur la face supérieure du support de moitiés de moule, un pivot est prévu, reçu de manière rotative dans l'évidement de l'entretoise.

14. Machine de moulage par injection horizontale selon la revendication 11 ou 13,
**caractérisée en ce que**
le poids de l'entretoise (16) est appuyé sur les deux colonnes supérieures (110 a, b) et/ou sur le support de moitiés de moule, sachant qu'entre l'entretoise et les colonnes et/ou entre l'entretoise (16) et le support de moitiés de moule, des paliers lisses ou à rouleaux sont prévus.

15. Machine de moulage par injection horizontale selon l'une des revendications 10 à 14,
**caractérisée en ce qu'**
il s'agit d'une machine de moulage par injection horizontale à deux plateaux et que les colonnes (110 a, b ; 120 a, b) sont entraînées lorsque les plaques de serrage de moule sont rapprochées et fermées.

16. Machine de moulage par injection horizontale selon l'une des revendications 10 à 14,
**caractérisée en ce qu'**
il s'agit d'une machine de moulage par injection horizontale à deux plateaux et que les colonnes (110 a, b ; 120 a, b) ne sont pas sont entraînées lorsque les plaques de serrage de moule sont rapprochées et fermées.
